# EUROPEAN PATENT APPLICATION

(11) **EP 2 827 292 A1**
(43) Date of publication of application: **21.01.2015**
(21) Application number: 13761086.1
(22) Date of filing: 22.02.2013
(51) Int. Cl.: G06Q 30/02

(54) **ADVERTISING PROVISION SYSTEM, ADVERTISING CONTROL DEVICE, AND ADVERTISING CONTROL PROGRAM**

(30) Priority: 15.03.2012 JP 2012059379
(71) Applicant: Kabushiki Kaisha Sega Doing Business As Sega Corporation, Tokyo 144-8531 (JP)
(72) Inventor: IWAKI, Minoru, Tokyo 144-8531 (JP); IGUCHI, Kazuma, Tokyo 144-8531 (JP); SUZUKI, Kiyoshi, Tokyo 144-8531 (JP); KAWAMURA, Hiroyuki, Tokyo 144-8531 (JP); ITO, Manato, Tokyo 144-8531 (JP); FUJINUMA, Toshiyuki, Tokyo 144-8531 (JP); TANI, Hidetaka, Tokyo 144-8531 (JP); YOSHIOKA, Atsushi, Tokyo 144-8531 (JP); TSUCHIYA, Taku, Tokyo 144-8531 (JP); SAKAI, Shinya, Tokyo 144-8531 (JP)
(74) Representative: Leeming, John Gerard
(86) International application number: PCT/JP2013/054520
(87) International publication number: WO 2013/136946

(57) **Abstract**

[Problem] To provide an effective adjustment of an advertising volume

[Solution] Upon receiving use information indicating that advertising information has been used in a terminal device from the terminal device, a variable parameter corresponding to an electronic commodity with which the advertising information is associated on the terminal device and/or a variable parameter corresponding to an electronic commodity as information included in the advertising information is updated and then the advertising information associated with the electronic commodity to be transmitted is controlled on the basis of the variable parameters after the updating.

## Description

### Technical Field

The present invention relates to a technique of providing or controlling advertisements via a communication network.

### Background Art

There has been provided a service in which a banner advertisement or the like is transmitted from a web server to a terminal device connected to a communication network in order to cause the terminal device to display the advertisement (banner advertisement) on software such as a web browser which operates on the terminal device and then a user of the terminal device receives detailed information on a commodity (hereinafter, including a service) to be advertised or the like from an advertising server by selecting the advertisement (for example, by clicking or tapping) and is guided to the purchase of the commodity.

In the advertising service as described above, advertisement request information received from an advertisement viewer includes information specifying an advertising media provider so as to identify the advertising media provider of advertisement which has been viewed and to distribute advertising rates to a plurality of advertising media providers appropriately (for example, refer to the following Patent Document 1).

### Citation List

### Patent Document

Patent Document 1: Japanese Patent Application Laid-Open No. 2007-226598

### Summary of the Invention

### Problem to be Solved by the Invention

According to the conventional art, the service is intended to transmit only advertisements desired by the advertisement viewer to the terminal device in response to the advertisement request information from the advertisement viewer. Therefore, it has been impossible to adjust an advertising volume effectively such as to select the advertisement of a commodity or the like to be advertised or to increase or decrease the advertising volume.

It is an object of the present invention to provide effective adjustment of an advertising volume.

The objects of the present invention are not limited to the object described above, but it may be understood as another object of the present invention to achieve such operation/working effects as are derived from the constitutions exhibited by the mode for carrying out the invention hereinafter described but are not achieved by the conventional arts.

### Means for Solving the Problem

According to one aspect of the present invention, there is provided an advertising provision system which provides advertising information on any one of a plurality of electronic commodities to a terminal device via a communication network. The advertising provision system includes; parameter storage means for storing a variable parameter for every plurality of electronic commodities; advertising information storage means for storing advertising information including information on any one of the electronic commodities; transmission means for transmitting the advertising information to the terminal device in association with any one of the electronic commodities; receiving means for receiving use information indicating that the transmitted advertising information has been used in the terminal device from the terminal device; and control means which updates a variable parameter corresponding to the electronic commodity with which the advertising information is associated and/or the variable parameter corresponding to the electronic commodity as information included in the advertising information upon receiving the use information at the receiving means and controls the advertising information associated with the electronic commodity to be transmitted through the transmission means on the basis of the variable parameters after the updating.

Here, the use information may include viewing information indicating that the advertising information has been selected in the terminal device and/or introduction information indicating that the electronic commodity as information included in the advertising information has been introduced through the advertising information, and the control means may vary the update degree of the variable parameter according to whether the information is the viewing information or the introduction information.

Additionally, the parameter storage means stores a price parameter corresponding to the price of the electronic commodity, and the control means may vary the update degree of the variable parameter according to the price parameter.

Moreover, the updating may include increasing or decreasing the variable parameter corresponding to the electronic commodity with which the advertising information is associated and decreasing or increasing the variable parameter corresponding to the electronic commodity as information included in the advertising information.

Furthermore, according to another aspect of the present invention, there is provided an advertising control device for use in an advertising provision system described above. The advertising control device includes: parameter storage means for storing a variable parameter for every plurality of electronic commodities; advertising information storage means for storing advertising information including information on any one of the electronic commodities; transmission means for transmitting the advertising information to the terminal device in association with any one of the electronic commodities; receiving means for receiving use information indicating that the transmitted advertising information has been used in the terminal device from the terminal device; and control means which updates a variable parameter corresponding to the electronic commodity with which the advertising information is associated and/or the variable parameter corresponding to the electronic commodity as information included in the advertising information upon receiving the use information at the receiving means and controls the advertising information associated with the electronic commodity to be transmitted through the transmission means on the basis of the variable parameters after the updating.

According to still another aspect of the invention, there is provided an advertising control program which causes a computer to function as the advertising control device described above. The advertising control program causes the computer to perform the processes of: storing a variable parameter for every plurality of electronic commodities; storing advertising information including information on any one of the electronic commodities; transmitting the advertising information to the terminal device in association with any one of the electronic commodities; receiving use information indicating that the transmitted advertising information has been used in the terminal device from the terminal device; and updating a variable parameter corresponding to the electronic commodity with which the advertising information is associated and/or the variable parameter corresponding to the electronic commodity as information included in the advertising information upon receiving the use information and controlling the advertising information associated with the electronic commodity to be transmitted on the basis of the variable parameters after the updating.

### Brief Description of the Drawings

[Fig. 1] Fig. 1 is a diagram illustrating a configuration example of an advertising provision system according to one exemplary embodiment.
[Fig. 2] Fig. 2 is a diagram illustrating a state where a customer is sent or attracted among four applications which are examples of an electronic commodity in the present exemplary embodiment.
[Fig. 3] Fig. 3 is a diagram illustrating sending/attracting customer points for each application in the present exemplary embodiment.
[Fig. 4] Fig. 4 is a block diagram illustrating a configuration example of a terminal illustrated in Fig. 1.
[Fig. 5] Fig. 5 is a block diagram illustrating a hardware configuration example of an advertising control server illustrated in Fig. 1.
[Fig. 6] Fig. 6 is a block diagram illustrating a functional configuration example of the advertising control server illustrated in Fig. 5.
[Fig. 7] Fig. 7 is a flowchart for describing a system overall flow according to the present exemplary embodiment.
[Fig. 8] Fig. 8 is a diagram for describing an example of user authentication processing illustrated in Fig. 7.
[Fig. 9] Fig. 9 is a diagram for describing an example of banner processing illustrated in Fig. 7.
[Fig. 10] Fig. 10 is a diagram for describing an example of banner processing illustrated in Fig. 7.
[Fig. 11] Fig. 11 is a diagram for describing an example of banner processing illustrated in Fig. 7.
[Fig. 12] Fig. 12 is a diagram for describing an example of offer processing illustrated in Fig. 7.
[Fig. 13] Fig. 13 is a diagram for describing an example of offer processing illustrated in Fig. 7.
[Fig. 14] Fig. 14 is a diagram for describing an example of offer processing illustrated in Fig. 7.
[Fig. 15] Fig. 15 is a flowchart illustrating an example of sending/attracting customer balance processing (banner case) illustrated in Fig. 9.
[Fig. 16] Fig. 16 is a flowchart illustrating an example of sending/attracting customer balance processing (offer case) illustrated in Fig. 12.
[Fig. 17] Fig. 17 is a diagram illustrating a display example of a normal banner according to the present exemplary embodiment.
[Fig. 18] Fig. 18 is a diagram illustrating a variation of the normal banner illustrated in Fig. 17.
[Fig. 19] Fig. 19 is a diagram illustrating a display example of a campaign banner according to the present exemplary embodiment.
[Fig. 20] Fig. 20 is a diagram illustrating a display example of an offer page according to the present exemplary embodiment.

### Mode for Carrying out the Invention

Hereinafter, the exemplary embodiments of the present invention will be described with reference to appended drawings. The exemplary embodiments described hereinafter, however, are illustrative only and are not intended to exclude various modifications and technical applications that are not specifically described herein. That is, the present invention can be carried out with various modifications (for example, by combining the embodiments) without departing from the scope of the invention. Furthermore, the same or like reference numerals denote the same or like elements throughout the drawings in the description below. The drawings are schematic, and do not necessarily coincide with the actual dimensions, ratios, quantities, and the like. The individual configurations or the like can be each replaced with another configuration having equivalent functions. In some cases, there are included parts different in dimensional relationship, proportions, or the like between the drawings.

### [1] Example of system configuration

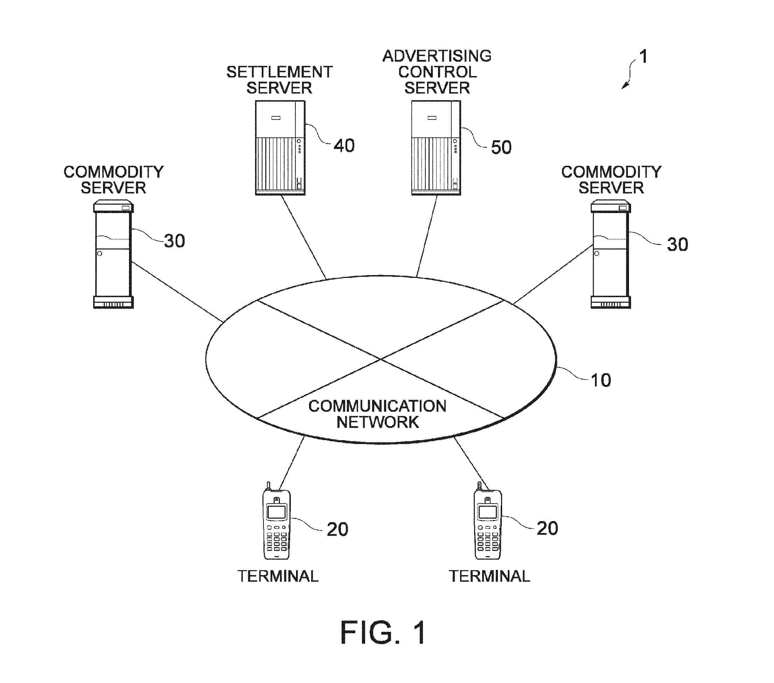

Fig. 1 is a diagram illustrating a configuration example of an advertising provision system according to one exemplary embodiment. The advertising provision system 1 illustrated in Fig. 1 is a system providing a plurality of pieces of electronic commodity information (hereinafter, also referred to as "electronic commodities") and advertising information including information on the electronic commodities (banner advertisement or the like) to a terminal device 20 via a communication network 10.

The advertising provision system 1 illustratively includes the communication network 10, one or more terminal devices (hereinafter, simply referred to as "terminals") 20, one or more commodity servers 30, a settlement server 40, and an advertising control server 50.

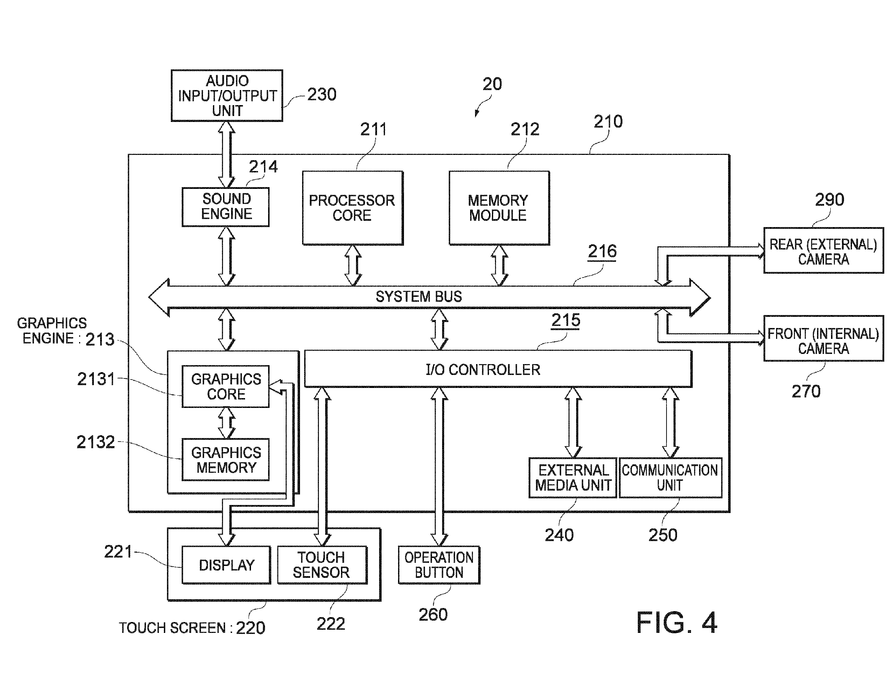

The terminal 20 is an intelligent device such as a personal computer (PC) or a personal digital assistant (PDA), a cell phone, a smartphone, or a tablet computer. The terminal 20 is able to communicate with the commodity server 30, the settlement server 40, or the advertising control server 50 via the network 10, as needed. A hardware configuration example of the terminal 20 is described later with reference to Fig. 4.

The communication network (hereinafter, also simply referred to as "network") 10 may be either a wireless network or a wired network. Examples of the network 10 include a wireless LAN, infrared communication, 3G, WiMax®, Bluetooth®, c. Link®, HDMI®, wired LAN, a telephone line network, a mobile telephone network, a PHS network, a lamp line network, and a network compliant with IEEE 1394 or the like.

The commodity server 30 is a server computer which is an example of an electronic commodity storage means which stores and manages electronic commodity information (for example, an application program such as a game). The commodity server 30 is able to provide (transmit) commodity information (hereinafter, also referred to as "electronic commodities") to the terminal 20 in response to a request or the like received from the terminal 20 via the network 10. The electronic commodities may include data such as music, image, and text.

The settlement server 40 is a server computer which performs settlement processing associated with the purchase of an electronic commodity. The settlement server 40 is able to perform settlement processing of the electronic commodity in response to a purchase request or the like of the electronic commodity received from the terminal 20 via the network 10.

In other words, the terminal 20 is able to access to the commodity server 30 via the network 10 to receive and install the electronic commodity such as an application program (hereinafter, simply referred to as "application" or abbreviated as "appli" in some cases) or the like from the commodity server 30. The commodity server 30 may store and manage a plurality of electronic commodities. The electronic commodity may be either paid or free. In the case where the electronic commodity is paid, the terminal 20 is allowed to communicate with, for example, the settlement server 40 to perform the settlement processing of the electronic commodity.

The advertising control server 50 is an example of an advertising control device and is a server computer which manages and controls the delivery or the like of advertising information (for example, banner advertisement or the like) including information on the electronic commodity provided to the terminal 20 by the commodity server 30.

The advertising control server 50 according to the present exemplary embodiment manages the status of utilization of the advertising information such as through which electronic commodity the advertising information thereof has been viewed or whether the electronic commodity has been introduced (for example, the installation or use, the execution of an application, or the like) to the terminal 20 through the advertising information and then adjusts or uniforms the number of sending/attracting customers for the electronic commodity according to the status of utilization.

The advertising information is not always "viewed," but is "selected" by "clicking" or "tapping" in some cases. Moreover, in the case where advertising information is displayed on the screen during execution of an application such as a game, the operation is not limited to "clicking" and "tapping," but the concept of "selecting" the advertising information also includes an operation of moving a character to the display area of the advertising information by dragging the character or the like.

For example, the advertising control server 50 manages the number of times that the advertising information corresponding to each electronic commodity (for example, an application) is viewed and/or the number of times that the electronic commodity is introduced through the advertising information. In addition, the advertising control server 50 calculates (for example, by addition or subtraction) points according to the number of times that the advertising information is viewed and/or the presence/absence of the introduction or the number of times (volume) that the electronic commodity is introduced and then varies the advertising volume, the contents or types of advertisements, or the like among the electronic commodities according to the number of points.

The commodity server 30 transmits the electronic commodity to the terminal 20 and the advertising control server 50 transmits the advertisement (banner or the like) to the terminal 20. As a non-limiting example, the following three timings can be provided as the timing at which the advertising control server 50 transmits the advertisement to the terminal 20:
(1) at the same time when the electronic commodity is transmitted;
(2) when receiving information indicating that the electronic commodity has been installed in the terminal 20 from the terminal 20; and
(3) when receiving information indicating that the electronic commodity has been used in the terminal 20 from the terminal 20.

Here, the transmission and installation of the electronic commodity is performed only once for each electronic commodity. On the other hand, the electronic commodity may be used many times. Therefore, more effective advertising is enabled by selecting an advertisement and transmitting the advertisement to the terminal 20 each time.

Furthermore, the functions of the advertising control server 50 may be implemented in a distributed manner by a plurality of server computers.

### [2] Outline of advertising control operation by advertising control server 50

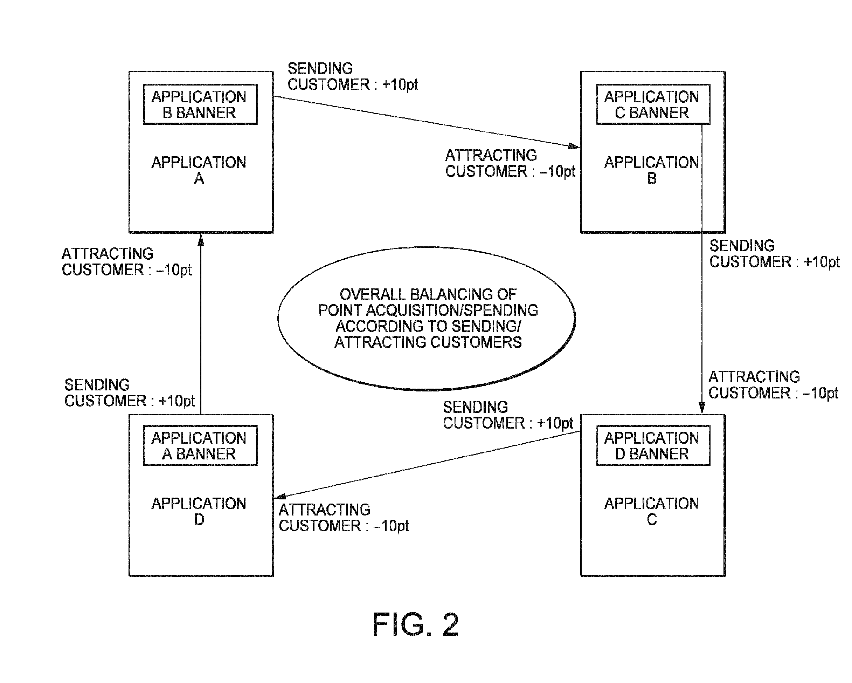

The outline of the advertising control operation by the advertising control server 50 will be described with reference to Fig. 2. Referring to Fig. 2, there is illustrated a state where a customer is sent or attracted among four applications A to D which are examples of an electronic commodity.

Here, it is assumed that a banner advertisement of an application B (application B banner) is displayed during execution of an application A in the terminal 20. Immediately after, for example, a user of the terminal 20 clicks or taps the application B banner on the terminal 20, the terminal 20 displays, for example, a commodity introduction screen and/or installation screen of the application B.

In other words, the display screen of the terminal 20 transitions to the commodity introduction screen or the like of the application B if the application B banner is selected during execution of the application A. Viewing this from the application A, the application A may be considered to have sent a user to the application B. On the other hand, from the viewpoint of the application B, the application B may be considered to attract the user from the application A.

At that time, the application A which is the customer sending source acquires points corresponding to the number of sent customers (for example, +10 points each or the like) and the application B to which the customers have been sent (which has attracted the customers) spends the points corresponding to the number of attracted customers (for example, -10 points each). In the present example, the application A is an example of an electronic commodity with which the advertising information of the application B is associated and the application B is an example of an electronic commodity as information included in the advertising information. The same rules are applied to each of other relationships between the applications B and C, between the applications C and D, and between the applications D and A.

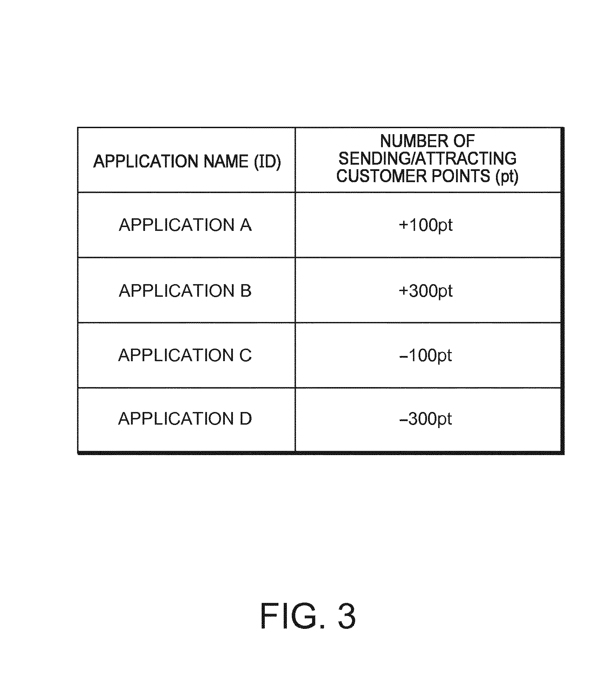

The advertising control server 50 records the points corresponding to the number of sent customers and the number of attracted customers between the applications as described above (hereinafter, the points are referred to as "sending/attracting customer points") in a storage device such as a memory or a hard disk as a database to manage the points (for example, see Fig. 3) and controls (selects and decides) which banner advertisement (advertising information) is to be associated with (in other words, sent or displayed) which application (electronic commodity) so that sending/attracting customer points are equally or uniformly provided (leveled) to the applications.

For example, in the example illustrated in Fig. 3, the application B (+300 points) has the highest number of sending/attracting customer points. In other words, the application B sends the greatest number of customers to other applications (in other words, other applications owe the application B). Therefore, for example, the application B causes the application D, which has the lowest number of sending/attracting customer points (-300 points), in other words, which received a large number of attracted customers sent from other applications and thus owes other applications, to display a banner advertisement of the application B.

The sending/attracting customer point is an example of a variable parameter. The increase/decrease rates (update degree) of the sending/attracting customer points may be different between cases where a user guided by the advertising information has viewed the commodity introduction screen of the destination to which the user is guided and where the user has introduced (installed, used, or the like) the electronic commodity on the commodity introduction screen of the destination.

For example, the update degree in the case where the user who introduced the electronic commodity may be higher than the update degree in the case where the user viewed the commodity introduction screen. In one example, the application A may acquire +10 points and the application B may spend -10 points when the user guided from the application A to the application B viewed the introduction screen of the application B while the application A may acquire +100 points and the application B may spend -100 points when the user installed the application B into the terminal 20.

In this instance, the number of points (update degree) to be acquired (spent) may be different between cases where the application B is paid or free. For example, the update degree of the paid application may be greater than the update degree of the free application according to the payment amount. For example, a price parameter is provided (although not illustrated in Fig. 3, the variable parameter may include a price parameter) and the update degree may be controlled to be varied on the basis of the price or a value (N) corresponding to the price.

Illustratively, if the application B costs N yen (N is an integer of zero or more; and N=0 means the application is free of charge), the application A may acquire +(100+N) points and the application B may spend -(100+N) points.

In the above example, the number of sending/attracting customer points of the application on the sending customer side interlocks with that of the application on the sent (attracting) customer side and the number of sending/attracting customer points is updated at the same increase/decrease rate (update degree). Thus, the above example can be achieved with a simple logic. The present invention, however, is not limited to this example.

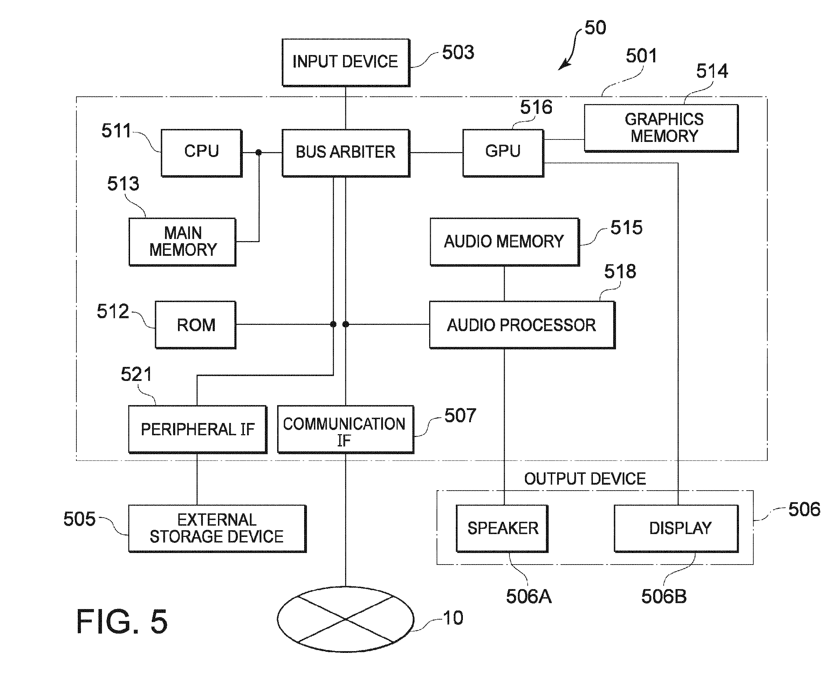

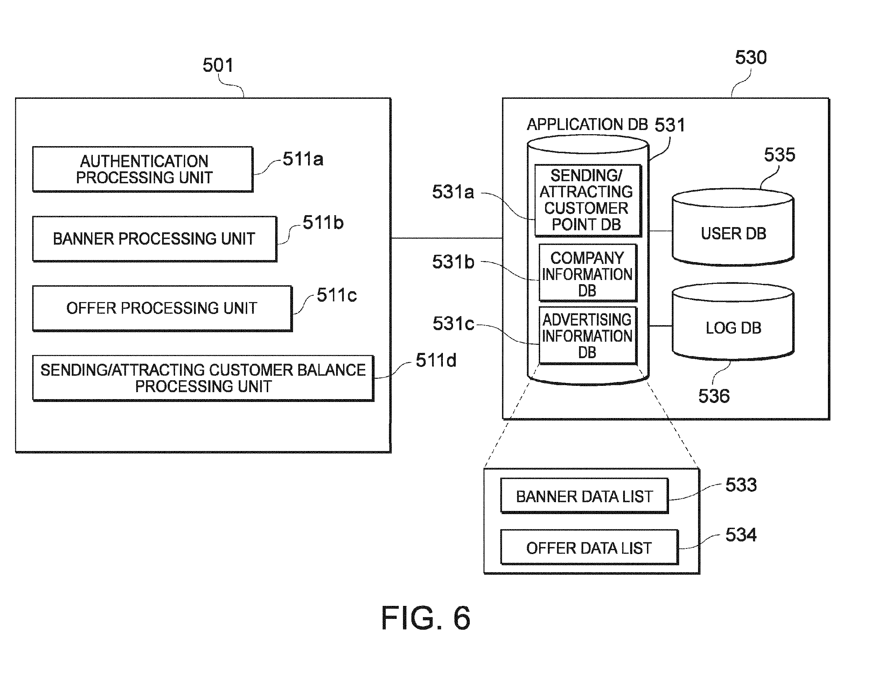

For example, the number of sending/attracting customer points may be updated only for either one of the applications, or the application on the sending customer side and the application on the attracting customer side may be updated at update degrees relatively different from each other. At all events, the control equivalent to the above example can be achieved. The configuration example of the advertising control server 50 is described later with reference to Figs. 5 and 6.

### [3] Configuration example of terminal 20

Referring to Fig. 4, there is illustrated the configuration example of the terminal 20 according to the present exemplary embodiment. The terminal 20 illustrated in Fig. 4 illustratively includes a computing device 210, a touch screen 220, an audio output unit 230, an external media unit 240, a communication unit 250, an operation button 260, a front camera 270, and a rear camera 290.

The computing device 210 integrally controls the terminal 20.

The touch screen 220 is, for example, a display which receives an image (for example, a still image, a moving image, a video, or the like) for use in representing or effectively showing an application such as a game, which is an example of the electronic commodity, from a graphics engine 213 to display the image or is a touch panel or the like which accepts an input with a user's (for example, game player's) touch operation and transmits an input signal to an I/O controller 215.

The audio input/output unit 230 is a speaker, an audio output terminal or the like which receives sounds (for example, music, voices, sound effects, or the like) for representing or effectively showing an application such as a game, which is an example of the electronic commodity, from a sound engine 214 to output the sounds or is a microphone or the like which accepts an audio input such as a user's (for example, a game player's) voice or the like and transmits an audio signal to the sound engine 214.

The external media unit 240 is an interface enabling an access to external storage media and is connected to various memory cards, magnetic or optical disk unit, and the like.

The communication unit 250 is connected to the network 10 so as to enable network communications with other terminals 20, various servers 30, 40, and 50, and the like.

The operation button 260 is used instead of a user input on the touch screen 220 or used to complement the user input. The computing device 210 is a computer circuit element which includes various processors, a memory, and the like, for example, including a chipset.

The computing device 210 according to the present exemplary embodiment illustratively includes a processor core 211, a memory module 212, a graphics engine 213, a sound engine 214, an I/O controller 215, and a system bus 216 connecting these components. Moreover, the computing device 210 may include a media engine as a processor for use in processing a dynamic picture image or the like, whose processing applies a load, at high speed, in addition to the data processing functions of the processor core 211, the graphics core 2131, and the like.

The processor core 211 is a chip which functions as a main processor of the computing device. In this specification, the term "processor core" can be used synonymously with a processor which means the main processor, a CPU, an MPU, or the like.

The processor core 211 executes, for example, a program loaded into the memory module 212 to cause the computing device 210 to implement various functions.

In other words, in the computing device 210, the processor core 211 executes a program to control other hardware units/components according to the description contents of the program, by which an application such as a game is executed in the terminal 20 as a whole.

The application may be executed under the control of, for example, the processor core 211 which executes an operating system (OS). The processor core 211 may be either a single core or a multicore. The processor core 211 may include a multi-order data cache which is not illustrated.

Moreover, the processor core 211 may be connected to a floating-point processor (FPU), a vector floating-point processor (VFPU), and the like, which are not illustrated, to execute an application in cooperation with these processors.

The memory module 212 illustratively stores one or more applications such as games which are examples of the electronic commodities, various data for use in executing the applications, identification information for identifying the terminal 20 (terminal ID), identification information issued from the advertising control server 50 (server ID), and the like.

The memory module 212 may include, for example, any one of a volatile memory represented by a DRAM, a unrewritable nonvolatile memory represented by a mask ROM, and a rewritable nonvolatile memory represented by a flash memory or a magnetic disk or an appropriate combination thereof.

The volatile memory is illustratively provided in the main memory of the processor core 211 and stores, for example, an application and a part or all of data used to execute the application, as required.

The nonvolatile memory stores, for example, BIOS, an OS program, a device driver, system data necessary to control the terminal 20, graphic data, image data taken with a camera 270 and/or 290, and the like.

The nonvolatile memory may include a flash memory in its entirety, without a mask ROM. Moreover, the entire memory module 212 may be a rewritable nonvolatile memory such as a flash memory. The external media slot external storage medium of the terminal 20 may be also provided as a part of the memory module 212.

The graphics engine 213 performs various graphics processes under the control of the processor core 211. The graphics engine 213 may illustratively include a graphics core 2131 and a graphics memory 2132.

The graphics core 2131 is an example of a graphics processor having a function of generating or drawing 2D and/or 3D computer graphics (CG) and is sometimes referred to as a video display processor (VDP) or a graphics processing unit (GPU).

The graphics core 2131 is able to generate image data by reading graphic data stored in the graphics memory 2132 and performing various graphics processes (for example, a geometry process, a rendering process, a texture mapping process, and the like).

Illustratively, the graphics core 2131 may include a geometry processor for calculating the geometry (coordinates) of a polygon and a rendering processor for rasterizing or rendering (drawing) the polygon whose geometry has been calculated. Furthermore, the graphics core 2131 may include a video encoder, a high-definition multimedia interface (HDMI), or the like in order to output the drawn image to the touch screen 220 or the like.

For example, with respect to the coordinates in a two-dimensional or three-dimensional space of a polygon, the geometry processor performs a rotation or enlargement of a matrix and then performs an affine transformation or the like to obtain the coordinates of the polygon. Moreover, the geometry processor may include "geometry shader" (or vertex shader) which performs tessellation such as polygon division or spline supplement.

For example, with respect to the polygon whose coordinates have been calculated, the rendering processor pastes image data called texture and renders the image data in the graphics memory with various effects applied. In examples of various effects, a programmable shader or the like is used to calculate a light spot and shadow (shading), to represent light and dark regions, and to calculate a semitransparent region, blur, fog, gradation, high dynamic range synthesis (HDR), and the like.

As examples of the types of polygon, there are a point polygon (point), a line polygon (line list), a surface polygon such as a triangle or a square, an aggregate of surface polygons, and the like. In addition, when rendering by using ray tracing or the like, the rendering processor is able to draw an object defined with a circle, an ellipse, a sphere, a blob, or other areas.

The processor core 211 may perform a part or all of the image processing described above which is performed by the graphics core 2131. The image data generated by the graphics core 2131 is converted to a given video signal by a video interface circuit such as a video encoder and then output to the touch screen 220.

The sound engine 214 performs various sound processes (for example, an effect process, a mixing process, and the like) appropriately for sound data stored in a sound memory (not illustrated) under the control of the processor core 211.

The sound engine 214 may be a digital signal processor (DSP) with a PCM (wave) sound source or the like for outputting music, voices, and sound effects. In addition, the sound engine 214 is able to calculate various audio effects such as reverberation and reflection by performing calculations of a physical model sound source, an FM sound source, and the like.

The sound data processed by sound engine 214 is converted to a given audio signal by a sound interface circuit, which is not illustrated, and output to the audio output unit 230. The sound engine 214 may support the recognition or the like of a voice input from a microphone, which is not illustrated.

The I/O controller 215 is an example of an interface circuit which controls the output or input to or from various external units. The I/O controller 215 is allowed to be connected to a touch sensor 222, the operation button 260, the external media unit 240, and the communication unit 250. The I/O controller 215 converts external signals supplied by various units, which are connected to the I/O controller 215, to internal data in the computing device 210 and converts the internal data to external signals appropriate to various units.

The touch screen 220 is an example of a user interface device and may include a display (screen) 221 and a light-permeable touch sensor 222 which is formed so as to substantially match the size of the display 221. The touch screen 220 is able to display an image adequate for the execution of an application under the control of the computing device 210 so as to accept user's interactive touch operations (clicking or tapping).

The display 221 displays an image (for example, a still image, a moving image, a video, or the like) on the display 221 on the basis of video signals transmitted from the graphics engine 213. The display 221 may either correspond to the 2D display or to the 3D display of the stereoscopic vision or the like.

The touch sensor 222 outputs an operation signal adequate for the user's touch operation. The user's touch operation may be made with a user's finger or may be a stylus or the like. Although it is possible to adopt, for example, an electrostatic capacitance type for the touch sensor 222, the touch sensor 222 is not limited thereto.

The operation signal output from the touch sensor 222 is input to the computing device 210. Upon detecting the operation signal received from the touch sensor 222, the computing device 210 interprets the operation signal as the signal for an operation on the application and performs processing suitable for the operation.

For example, the computing device 210 is used to calculate position information on the display 221 on the basis of the operation signal from the touch sensor 222 and to decide an operation action together with the image and time information. The terminal 20 according to the present exemplary embodiment is able to accept a multi-touch operation with multiple fingers (or styli).

The audio output unit 230 is an example of an audio output device. According to the execution status of the application, the audio output unit 230 provides sounds (for example, voice, music, sound effects, etc.) to the user. The audio output unit 230 generates sounds on the basis of audio signals from the sound engine 214.

The external media unit 240 is an example of a media interface device. The external media unit 240 allows the computing device 210 to access to an external storage medium. The external storage medium may be a memory card, a USB memory, a hard disk drive (HDD), a flash memory, a static random access memory (SRAM), a magnetic tape device, an optical disk device, or the like. The external storage medium is able to store various data such as parameters for use in executing an application. The external storage medium may also store the terminal ID and the server ID described above. The terminal 20 is used by reading an application or the like from the external storage medium and then transferring and storing it into the memory module 212.

The application or the like can be provided in a form recorded in a computer-readable recording medium. The recording medium may include, for example, a hard disk, a magnetic disk, a magnetic optical disk, a compact disk read-only memory (CD-ROM), a digital versatile disk (DVD), a Blue-ray disk (BD), a ROM cartridge, a battery backup RAM cartridge, a flash memory cartridge, a nonvolatile RAM cartridge, and the like. Moreover, the electronic commodity such as an application can also be received from the commodity server 30 via the network 10 by means of the communication unit 250.

Note that the term "computer" means a concept including, for example, hardware and an operating system (OS) and, in some cases, means hardware operating under the control of the OS. Moreover, in the case where the hardware is operable with a program only without need for the OS, the hardware can be considered to be equivalent to a computer. The hardware may include an arithmetic unit such as a CPU and a reading device capable of reading a program recorded in the recording medium.

The application or the like includes program codes for causing the computer as described above to implement the functions of the terminal 20. A part of the functions may be implemented by the OS, instead of the program.

The communication unit 250 allows the terminal 20 to communicate with any other terminal 20 or various servers 30, 40, and 50 via the network 10.

### [4] Configuration example of advertising control server 50

The following describes the hardware configuration and functional configuration of the advertising control server 50. The hardware configurations of the game server 30 and the settlement server 40 may be equated to the configuration of the advertising control server 50.

### (4.1) Hardware configuration example

Referring to Fig. 5, there is illustrated a hardware configuration example of the advertising control server 50 according to the present exemplary embodiment. The advertising control server 50 illustrated in Fig. 3 illustratively includes a control unit 501, an input device 503, an external storage device 505, and an output device 506. Moreover, the advertising control server 50 may include a communication interface (IF) 507.

The control unit 502 controls, for example, the entire operation of the advertising control server 50.

The input device 503 is used by a server administrator or the like to input an operation signal to the control unit 502. As an example of the input device 503, there is a keyboard, a pointing device such as a mouse or a trackball, or the like. Moreover, the input device 503 may include a touch pad and a touch panel provided in a display 506A described later.

Illustratively, the external storage device 505 may be detachably connected to the control unit 502 via a peripheral interface (I/F) 521. The peripheral IF 521 may be connected to one or more peripheral devices additionally. The external storage device 505 may be a storage device built in the advertising control server 50.

The external storage device 505 may be a hard disk drive (HDD), a flash memory, a static random access memory (SRAM), a magnetic tape device, an optical disc device, or the like. The external storage device 505 is able to store a program for use in advertising control (hereinafter, also referred to as "advertising control program"), various data such as parameters generated in a server and/or received from a terminal, and electronic commodities, advertising information, and the like. The advertising control server 50, which is an example of a computer, is used by reading an advertising control program or the like from the external storage device 505 and then transferring and storing the advertising control program to an internal memory such as a main memory 513 described later. The hardware configuration example in Fig. 5 is also applicable to the commodity server 30 illustrated in Fig. 3. In this case, the electronic commodity is stored in the commodity server 30 and then transmitted from the commodity server 30 to the terminal device. Also in this case, the advertising control server 50 may have the functions of the commodity server 30.

The advertising control program or the like can be provided in a form recorded in a computer-readable recording medium. The recording medium may include, for example, a hard disk, a magnetic disk, a magnetic optical disk, a compact disk read-only memory (CD-ROM), a digital versatile disk (DVD), a Blue-ray disk (BD), a ROM cartridge, a battery backup RAM cartridge, a flash memory cartridge, a nonvolatile RAM cartridge, and the like. Moreover, the advertising control program or the like may be provided to the advertising control server 50 via the network 10 by means of the communication IF 507.

Note that the term "computer" means a concept including, for example, hardware and an operating system (OS) and, in some cases, means hardware operating under the control of the OS. Moreover, in the case where the hardware is operable with a program only without need for the OS, the hardware can be considered to be equivalent to a computer. The hardware may include an arithmetic unit such as a CPU and a reading device capable of reading a program recorded in the recording medium.

The advertising control program or the like includes program codes for causing the computer as described above to implement the functions of the advertising control server 50. A part of the functions may be implemented by the OS, instead of the program.

The output device 506 illustratively includes a display 506A and a speaker 506B and provides video or voice appropriate to the execution state of the advertising control program or the like to the operator or the like of the advertising control server 50. A liquid crystal display, a plasma display panel (PDP), a head-mount display (HMD), or the like is applicable to the display 506A. Furthermore, the display 506A may be an integrated display with a large screen composed of a plurality of displays.

The communication IF 507 is a device or an interface which allows a connection to the network 10. The advertising control server 50 is able to communicate appropriately with the terminal 20 and other servers 30 and 40 connected to the network 10 via the communication IF 507.

The communication IF 507 has a transmission/reception function. Focusing on the transmission function, the communication IF 507 functions as an example of transmission means which transmits electronic commodities and advertising information to the terminal 20. The communication IF 507, which is an example of the transmission means, is able to transmit any one of the electronic commodities and advertising information associated with any other electronic commodity to the terminal 20. Moreover, focusing on the reception function, the communication IF 507 functions as an example of receiving means which receives use information (described later), which indicates that the advertising information has been used in the terminal 20, from the terminal 20.

It should be noted that a part or all of a graphics memory 514, an audio memory 515, a GPU 516, an audio processor 518, and an output device 506 (in other words, graphics-related functions and audio-related functions) can be omitted in the advertising control server 50 and the commodity server 30.

### (4.2) Functional configuration example of advertising control server 50

Subsequently, referring to Fig. 6, there is illustrated a functional configuration example of the advertising control server 50.

The advertising control server 50 illustrated in Fig. 6 includes an authentication processing unit 511a, a banner processing unit 511b, an offer processing unit 511c, and a sending/attracting customer balance processing unit 511 d, as examples of functions (control unit 501) to be implemented by the CPU 511 which reads the advertising control program or the like from the main memory 513 and executes the advertising control program or the like. The storage unit 530 illustrated in Fig. 6 corresponds to the main memory 513 and/or the external storage device 505 described above. The storage unit 530 illustratively stores an application database (DB) 531, a user database (DB) 535, and a log database (DB) 536.

The authentication processing unit 511a performs authentication processing with the terminal 20 on the basis of information stored in the user DB 535.

The user DB 535 illustratively stores information for identifying the terminal 20 (terminal ID) and identification information on the advertising control server 50 (server ID) uniquely corresponding to the terminal ID. The authentication processing is performed by using a combination of the terminal ID and the server ID.

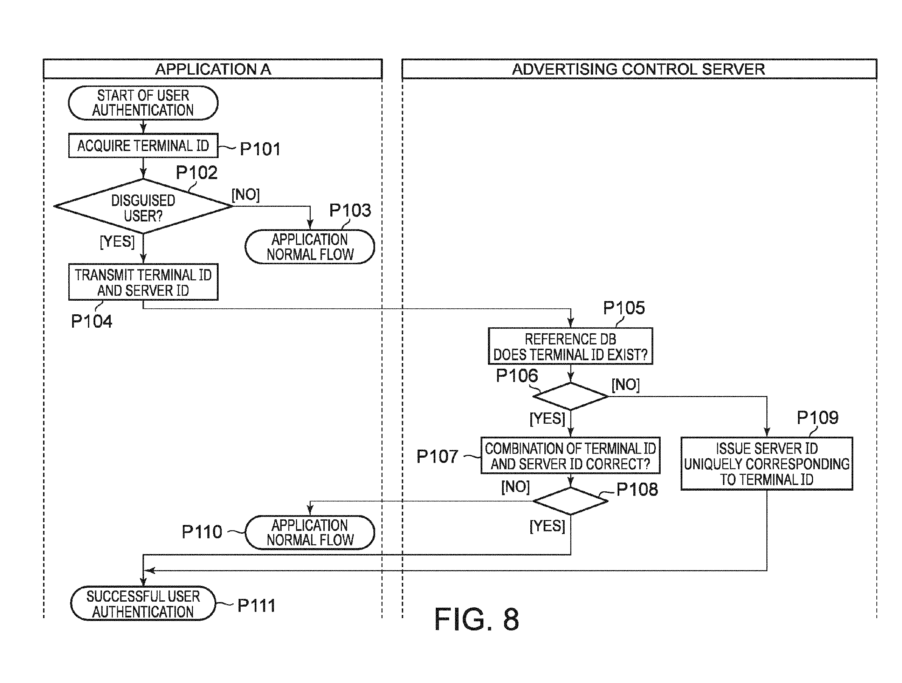

The terminal 20 having succeeded in the authentication processing is able to use the service (advertising control) provided by the advertising control server 50. The details of the authentication processing will be described later with reference to Fig. 8.

The banner processing unit 511b transmits banner advertisement to the terminal 20 that has issued a banner request and monitors whether the selection operation (such as, for example, clicking or tapping) of the banner advertisement has been performed on the terminal 20.

In the case of receiving information indicating that the selection operation of the banner advertisement has been performed from the terminal 20, the banner processing unit 511b updates the sending/attracting customer point as described with reference to Figs. 2 and 3 in conjunction with the sending/attracting customer balance processing unit 511d.

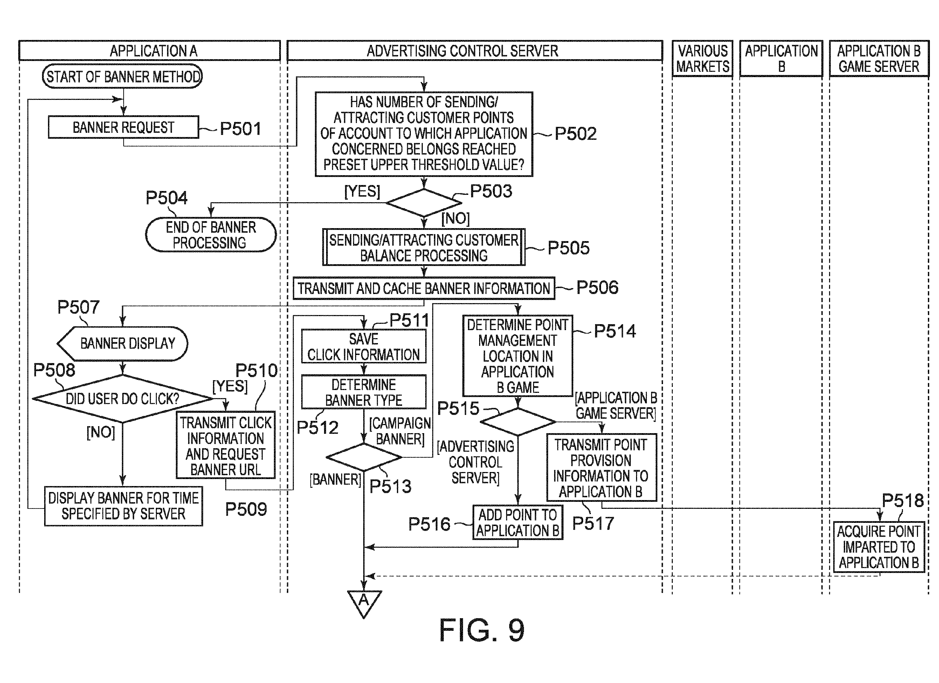

The banner processing unit 511b selects and decides the banner advertisement to be transmitted to the terminal 20 on the basis of the update result. The details of the banner processing performed by the banner processing unit 511b will be described later with reference to Figs. 9 to 11.

A plurality of types of banner advertisements may be prepared in advance. For example, it is possible to prepare a normal banner advertisement (hereinafter, also referred to as "normal banner") and a campaign banner advertisement (hereinafter, also simply referred to as "campaign banner").

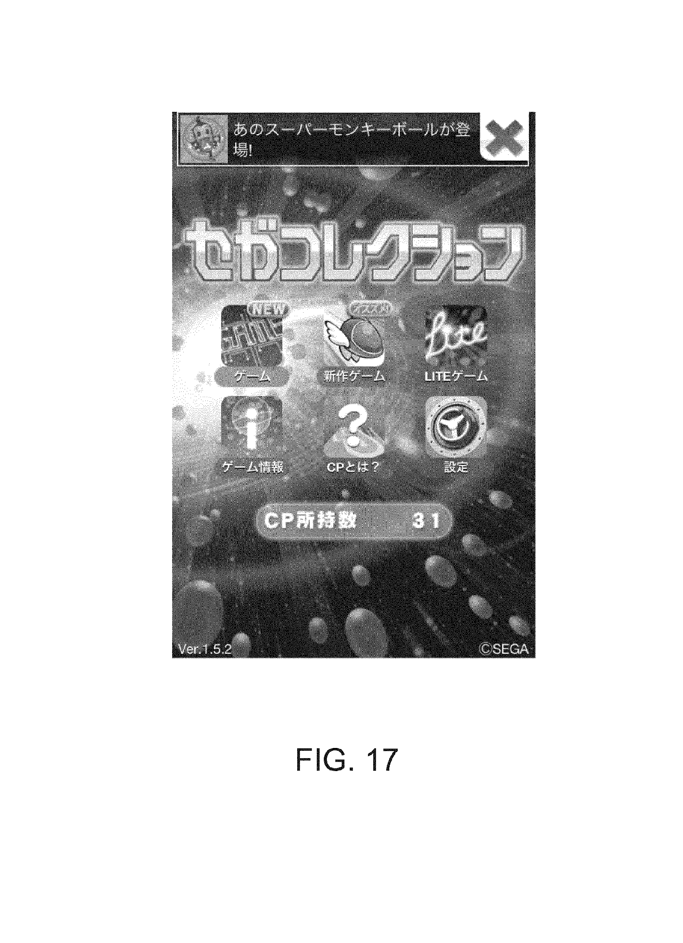

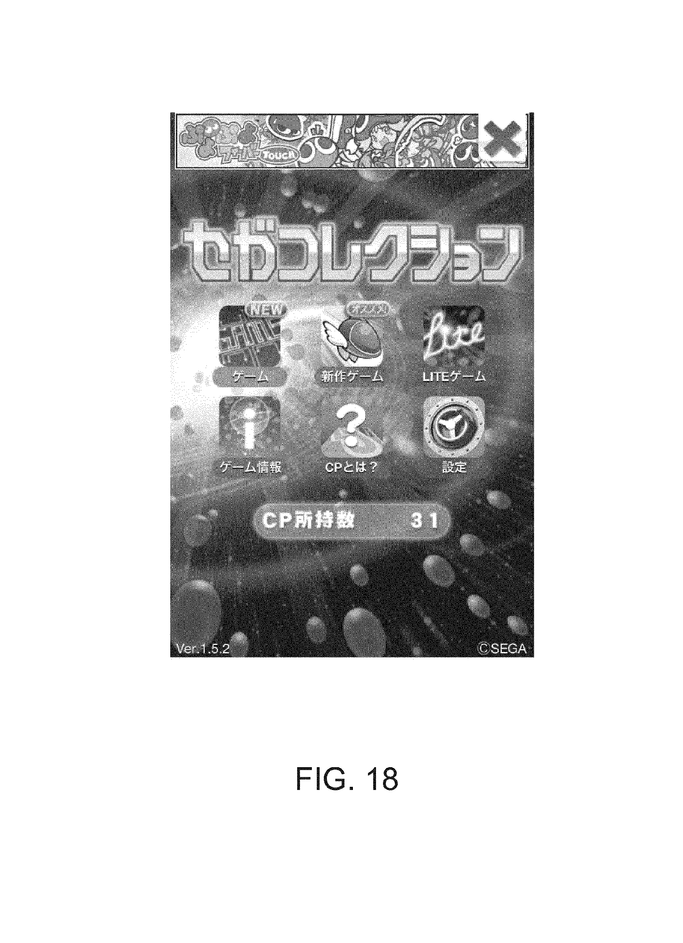

For example, the "normal banner" guides a user (causes a user to transition) to another electronic commodity to prompt the user to view the electronic commodity or the like. Referring to Figs. 17 and 18, there are illustrated examples of the normal banner.

Fig. 17 illustrates an example of a banner with textual information and Fig. 18 illustrates an example of a designed banner (for example, a banner with image information including a game title design or the like).

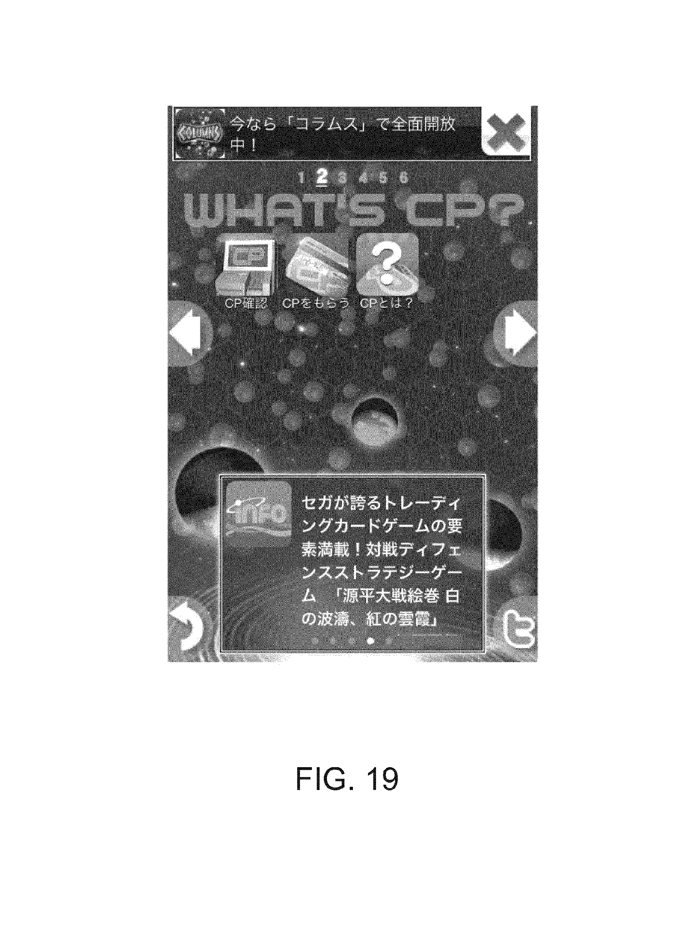

The "campaign banner" is a banner which prompts the user to introduce some other electronic commodity such as to indicate that, for example, if the user introduces (for example, installs or executes) an electronic commodity (for example, application B) at the destination to which the user is guided (transition destination), the user can get value information (reward: for example, a game point such as a parameter for use in a game or an in-game currency, an item, an additional program, data or the like) usable in the electronic commodity (the application B) at the destination to which the user is guided. Referring to Fig. 19, there is illustrated an example of a campaign banner.

Subsequently, the offer processing unit 511c transmits an offer advertisement to the terminal 20 which has issued an offer request and monitors whether the electronic commodity has been installed in the terminal 20 through a selection operation (such as, for example, clicking or tapping) on the offer advertisement.

Here, the term "offer advertisement" means an advertisement giving the terminal 20 notice of information that, for example, if the user installs another game application B, which is different from the game application A running on the terminal 20, value information (for example, a game point such as a parameter for use in a game or an in-game currency, an item, an additional program, data or the like) usable in the application A is imparted to the terminal 20 (hereinafter, the offer advertisement is also referred to as "offer page").

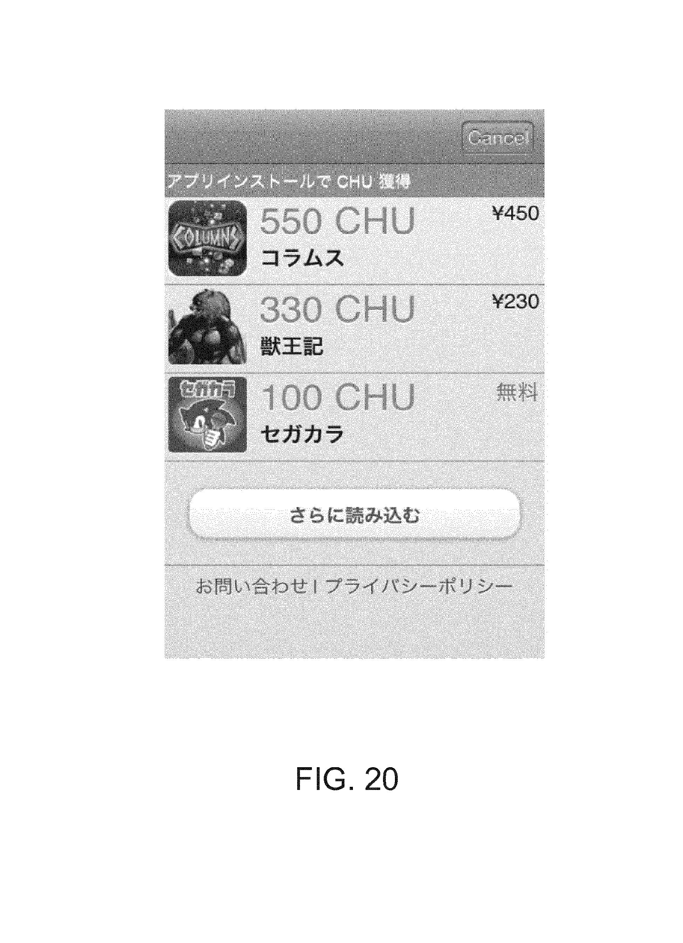

In other words, "offer advertisement" is illustratively an advertisement that gives the user of the terminal 20 an incentive for continuing the execution of the transition source application A with the installation of the transition destination application B as an outcome. An example of the offer page is illustrated in Fig. 20. Fig. 20 illustrates a state where three applications are on list as installation candidates.

The offer processing unit 511c monitors whether the above introduction processing has been performed in the terminal 20 (whether the offer is established) and updates the number of sending/attracting customer points as described with reference to Figs. 2 and 3 in conjunction with the sending/attracting customer balance processing unit 511d.

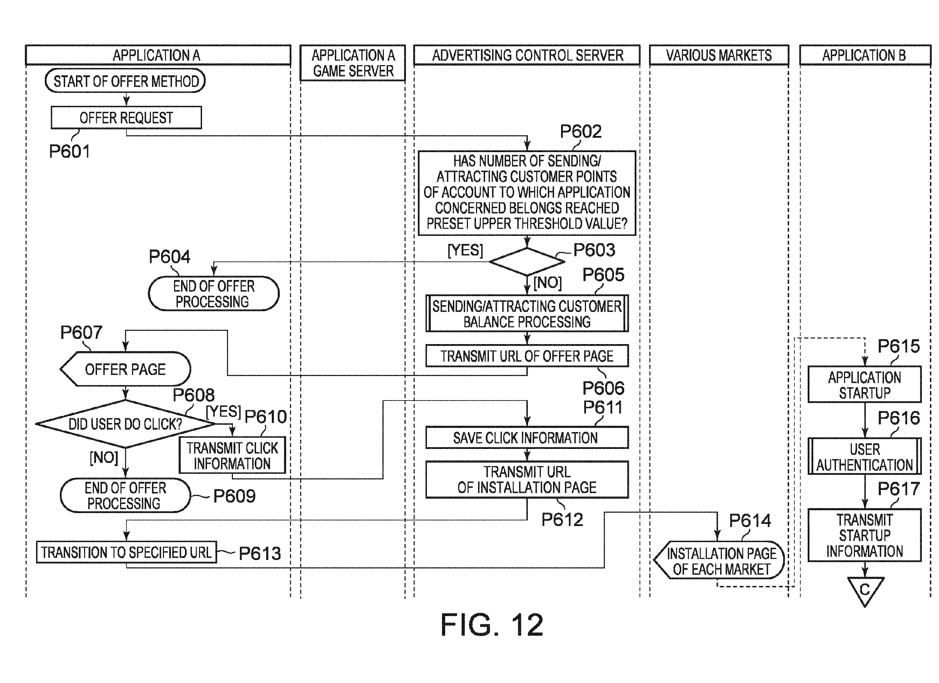

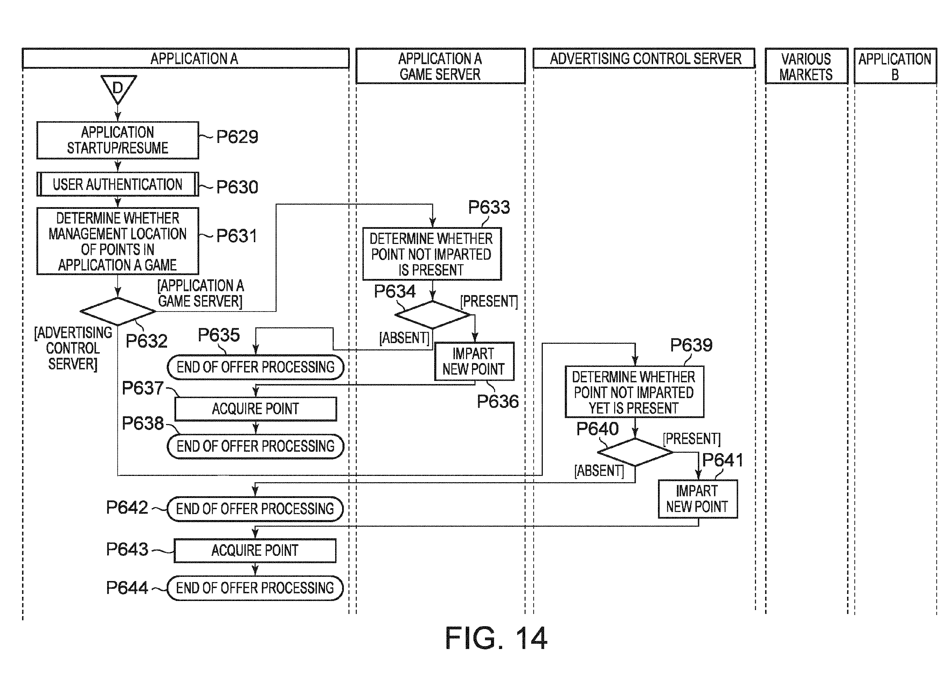

The offer processing unit 511b decides the list order or the like of the electronic commodities such as applications to be displayed on a priority basis on the offer page. The details of the offer processing performed by the offer processing unit 511b will be described later with reference to Figs. 12 to 14.

Subsequently, the sending/attracting customer balance processing unit 511d performs processing of balancing the sending/attracting customers among the electronic commodities on the basis of the number of sending/attracting customer points as described with reference to Figs. 2 and 3 in conjunction with the banner processing unit 511b and/or the offer processing unit 511c.

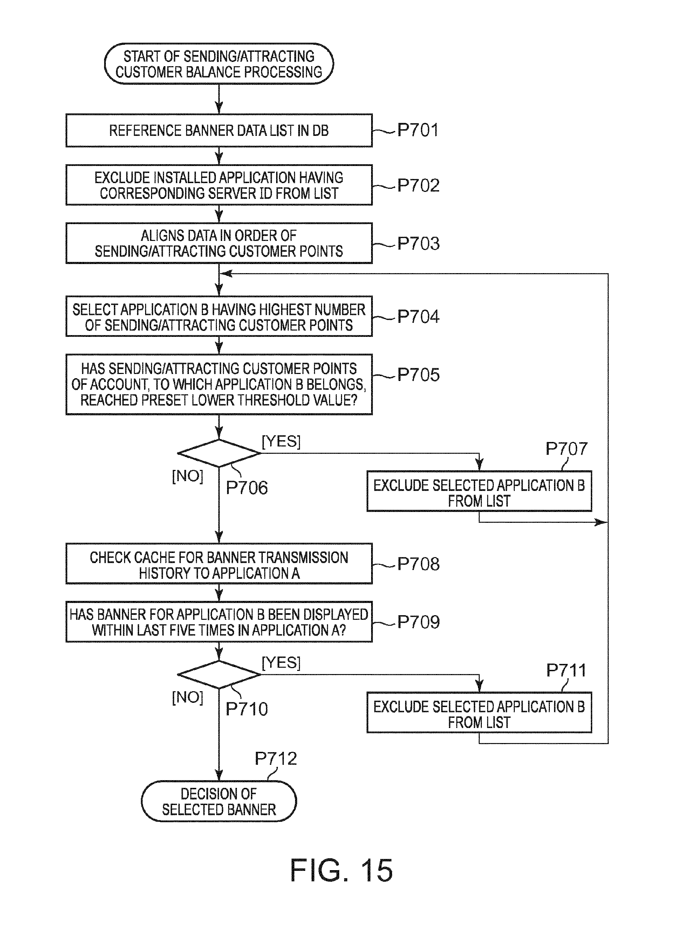

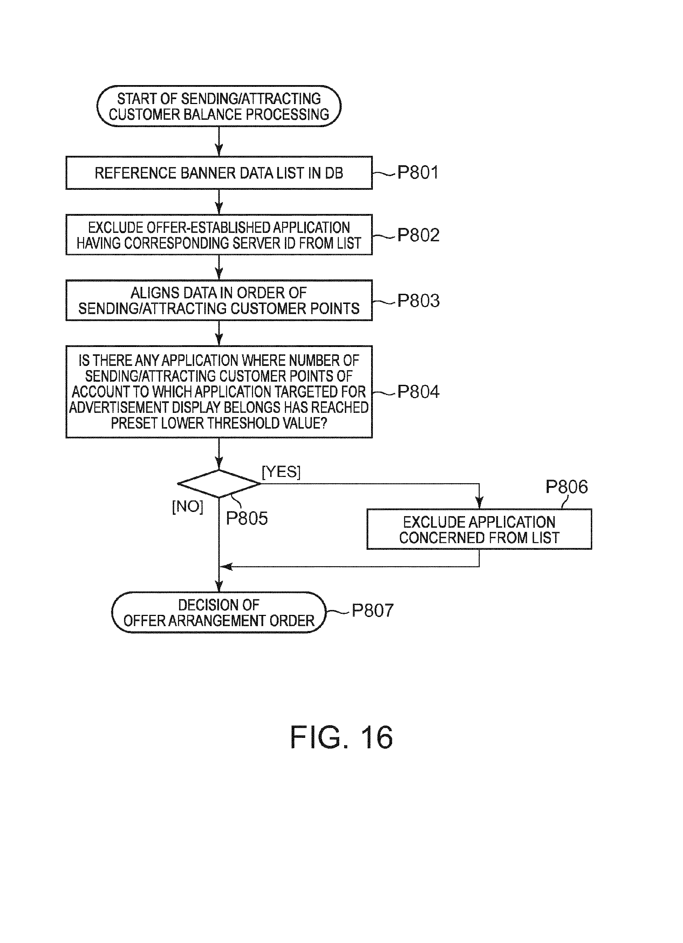

In other words, the sending/attracting customer balance processing unit 511d controls which advertising information is to be associated with which electronic commodity on the basis of the number of sending/attracting customer points. The details of the sending/attracting customer balance processing performed by the sending/attracting customer balance processing unit 511 d will be described later with reference to Figs. 15 and 16.

The application DB 531 stores information related to a plurality of applications which are examples of electronic commodities. Although the examples of the applications are game applications, the applications are not limited thereto.

Examples of the information related to the application include identification information of the application (hereinafter, also referred to as "application ID"), a sending/attracting customer point DB 531a for each application (application ID), a company information DB 531b for each application (application ID), a DB (advertising information DB) 531c for advertising information (banner advertisement and/or offer advertisement) associated with each application (application ID).

The sending/attracting customer point DB 531a is an example of a parameter storage means which stores variable parameter (sending/attracting customer point) for each application.

The advertising information DB 531c is an example of an advertising information storage means which stores advertising information including information on any one of the electronic commodities. The advertising information DB 531c illustratively stores a banner data list 533 and/or an offer data list 534.

The user DB 535 stores information on the terminal 20 and/or the user of the terminal 20 and, for example, saves a terminal ID and a server ID which are used for at least the aforementioned authentication processing as described above.

The log DB 536 stores log information such as the transmission history of advertising information and the usage history of the advertising information. Note here that the term "use of advertising information" illustratively means a concept including a selection operation (such as, for example, clicking, tapping, or moving a character to an advertisement display area) of a banner advertisement and/or an offer advertisement on the terminal 20 and/or introduction processing (such as, for example, the installation or use of the application) through the selection operation.

Therefore, the "use information" of the advertising information includes viewing information indicating that the advertising information has been selected (the banner is clicked or the like) in the terminal 20 and/or introduction information indicating that the commodity has been introduced (installed, used, or the like) through the advertising information. Accordingly, the log DB 536 functions as an example of an advertisement selection information storage means which accumulates and stores the use information as advertisement selection information.

The application DB 531 (advertising information DB 531c) is associated with the user DB 535 and the log DB 536. Thereby, it is possible to manage and figure out which advertising information associated with which application (electronic commodity) has been used on the terminal 20.

### [5] Description of system operation

The following describes the operation of the advertising provision system 1 configured as described above. Note that, however, in the following description, an example of the electronic commodity is an application.

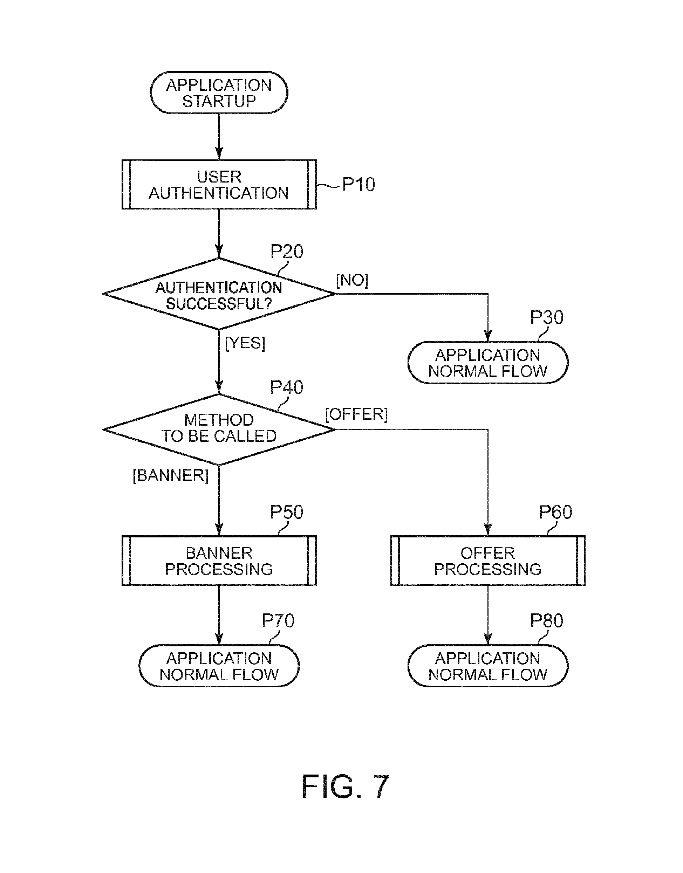

### (5.1) Entire system flow (Fig. 7)

As illustrated in Fig. 7, upon the startup of an installed application, the terminal 20 performs user authentication processing with the advertising control server 50 (processes P10 and P20).

In the case of failure in the user authentication caused by a communication failure or a server failure (if NO is determined in process P20), normal processing (for example, a game or the like) is performed by the started application in the terminal 20 (process P30). In other words, even in the case of failure in user authentication, the user of the terminal 20 only cannot use the service from the advertising control server 50, but can use the normal processing by the started application.

On the other hand, in the case of success in the user authentication, the advertising control server 50 determines a method to be called (for example, a method of acquiring a banner and a method of displaying an offer page) (process P40) and performs either one of banner processing and offer processing on the terminal 20 (process P50 or P60).

Upon completion of the banner processing (Figs. 9 to 11) or the offer processing (Figs. 12 to 14), the terminal 20 performs the normal processing by the started application (assumed to be the application A) (process P70 or P80).

For example, a banner advertisement is displayed during the execution of the application A in the terminal 20 after the banner processing, while the offer advertisement is displayed during execution of the application A in the terminal 20 after the offer processing.

### (5.2) User authentication processing (Fig. 8)

The following describes the details of the user authentication processing performed by the aforementioned advertising control server 50 (authentication processing unit 511 a) with reference to Fig. 8.

Upon the startup of a certain application A on the terminal 20, the application A acquires the identification information of the terminal 20 (terminal ID) (process P101) and determines whether the user is an undisguised user (process P102). For example, if the terminal ID saved in the terminal 20 with respect to the application A differs from the terminal ID of the terminal 20 where the application A is started up, it is determined that the terminal ID is disguised and the user of the terminal 20 is a disguised user.

If the user is determined to be a disguised user (if NO is determined in process P102), the terminal 20 (application A) performs the normal processing (game or the like) (process P103). On the other hand, unless the user is a disguised user (if YES is determined in process P102), the terminal 20 (application A) transmits, for example, a terminal ID and a server ID to the advertising control server 50 (process P104).

The advertising control server 50 searches the user DB 535 for the server ID received from the terminal 20 (application A). If the server ID is detected, the advertising control server 50 searches the user DB 535 for the terminal ID with reference to the user DB 535 (processes P105 and P106).

If the terminal ID received from the terminal 20 exists in the user DB 535 (in other words, if the terminal ID has already been registered) (if YES is determined in process P106), the advertising control server 50 determines whether the combination of the terminal ID and the server ID is correct (processes P107 and P108).

If the combination of the terminal ID and the server ID is correct as a result of the determination (if YES is determined in process P108), the advertising control server 50 transmits information indicating that the user authentication is successfully performed to the terminal 20 (process P111). This enables the terminal 20 to receive service from the advertising control server 50.

On the other hand, unless the combination of the terminal ID and the server ID is correct (if NO is determined in process P108), the advertising control server 50 transmits information indicating that the user authentication has failed to the terminal 20. In this case, the terminal 20 is not able to receive the service from the advertising control server 50, but the normal processing by the application A is performed.

Unless the terminal ID exists in the user DB 535 (ifNO is determined in process P106), the advertising control server 50 issues a server ID uniquely corresponding to the terminal ID to the terminal 20 (application A) (process P109). Thereby, the user authentication in the terminal 20 is successful

(process P111). Specifically, the user of the terminal 20 is able to receive the service from the advertising control server 50 as a new user.

### (5.3) Banner processing (Figs. 9 to 11)

The following describes the banner processing performed by the advertising control server 50 (banner processing unit 511b) with reference to Figs. 9 to 11.

Upon the startup of a certain application A in the terminal 20 and thereby causing the start of a banner method as illustrated in Fig. 9, the terminal 20 (application A) transmits a banner request to the advertising control server 50 (process P501).

Receiving the banner request, the advertising control server 50 determines whether the number of sending/attracting customer points (total points) of the account to which the banner request source application A belongs has reached a preset upper threshold value (processes P502 and P503). The term "account" is information issued (allocated) to, for example, each company which delivers the application or each development team of the application. The upper threshold value is a threshold value related to the sending/attracting customer points with respect to the entire application for each company or the like and is stored, for example, in the sending/attracting customer point DB 531a of the application DB 531.

As a result, if the number of sending/attracting customer points has reached the upper threshold value (if YES is determined in process P503), the advertising control server 50 determines that the application A is in a state where customers have been sent excessively and ends the banner processing. Therefore, the banner advertisement is not displayed for the application A started up in the terminal 20 (process P504).

On the other hand, unless the number of sending/attracting customer points has reached the upper threshold value (if NO is determined in process P503), the advertising control server 50 performs the sending/attracting customer balance processing by using the sending/attracting customer balance processing unit 511d (process P505), transmits the banner advertisement to the terminal 20, and temporarily saves (caches) information indicating that the banner advertisement has already been transmitted in, for example, the log DB 536 (process P506). The details of the sending/attracting customer balance processing will be described later with reference to Figs. 15 and 16.

Receiving the banner advertisement described above from the advertising control server 50, the terminal 20 displays the banner advertisement (process P507) and monitors whether a user's selection operation (such as, for example, clicking or tapping) of the banner advertisement has been performed (process P508).

Unless the user's selection operation of the banner advertisement has been performed (if NO is determined in process P508), the application A in the terminal 20 displays the banner advertisement only for the time specified by the advertising control server 50 (process P509) and returns to process P501. The information on the specified time for which the banner advertisement is displayed is transmitted from the advertising control server 50 to the terminal 20 together with the banner advertisement or independently of the banner advertisement. Alternatively, the information on the specified time may be previously retained in the terminal 20.

If the banner advertisement has been used (if YES is determined in process P508), the application A in the terminal 20 transmits use information indicating that the banner advertisement has been used (a command, a data string, or the like that the predefined advertising control server 50 is able to identify as use information) and a uniform resource locator (URL) request of the banner advertisement to the advertising control server 50 (process P510).

Receiving the aforementioned use information from the terminal 20, the advertising control server 50 saves the use information in, for example, the log DB 536 (process P511) and determines whether the type of banner advertisement (hereinafter, also referred to as "banner type") whose URL request has been issued is "normal banner" or "campaign banner" (processes P512 and P513).

As a result, if the banner type is "campaign banner," the advertising control server 50 determines whether the management location of the value information in the application (assumed to be the application B) targeted for campaign is the advertising control server 50 or the game server 30 which manages the application B (processes P514 and P515). Examples of the value information include a game point (for example, a parameter for use in a game, an in-game currency, or the like), an item, goods, an additional program, data or the like.

If the management location of the value information on the application B targeted for campaign is the game server 30 as a result of the above determination, the advertising control server 50 transmits information indicating that the value information is imparted to the application B targeted for campaign to the game server 30 (process P517). Thereby, the game server 30 acquires the value information with respect to the application B targeted for campaign ((process P518).

On the other hand, if the management location of the value information on the application B targeted for campaign is the advertising control server 50, the advertising control server 50 adds the value information to the application B (process P516). In addition, if the banner type is the normal banner, the advertising control server 50 determines whether the customer has been sent within the same company as described below.

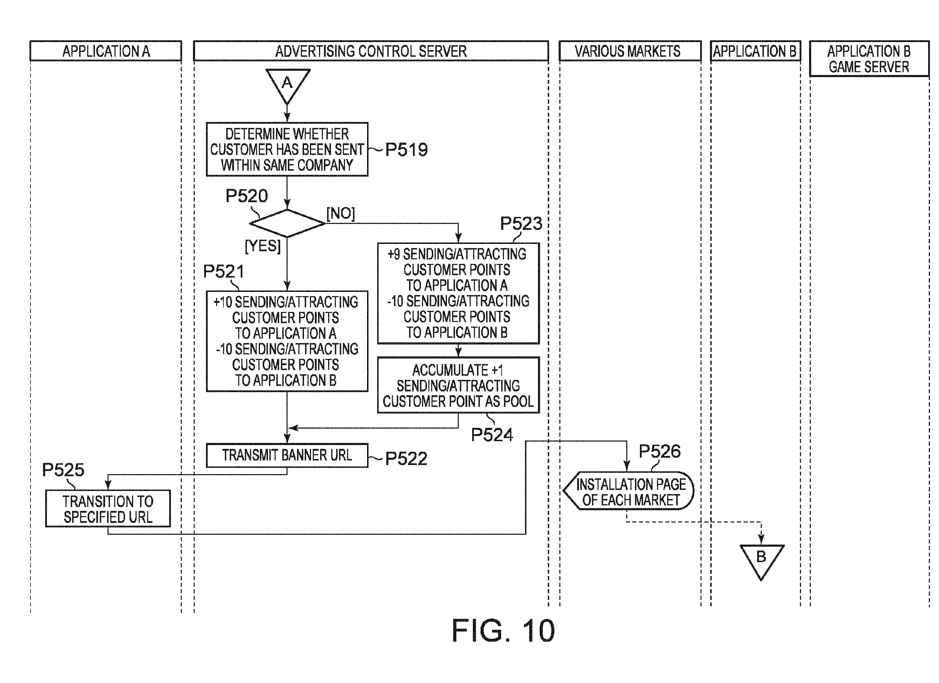

As illustrated in Fig. 10, the advertising control server 50 determines whether the customer has been sent within the same company (processes P519 and P520). The determination can be made on the basis of the company information for each application which is saved and managed in the company information DB 531b of the application DB 531, for example.

If the customer is sent within the same company (if YES is determined in process P520), the advertising control server 50 increases the sending/attracting customer points (for example, +10 points) with respect to the application A which is the customer sending source and decreases the sending/attracting customer points (for example, -10 points) with respect to the application B which is the customer sending destination (targeted for campaign) (process P521).

On the other hand, unless the customer is sent within the same company (if NO is determined in process P520), the advertising control server 50 increases the sending/attracting customer points (for example, +9 points) with respect to the application A which is the customer sending source and decreases the sending/attracting customer points (for example, -10 points) with respect to the application B which is the customer sending destination (targeted for campaign) (process P523).

Note here that the advertising control server 50 is able to accumulate (pool) +1 point as an insurance point in the sending/attracting customer point DB 531a (see Fig. 6) (process P524). The insurance point can be used as an adjustment point in the case of excessively sending customers or of excessively attracting customers.

After increasing or decreasing the sending/attracting customer points described above, the advertising control server 50 transmits the URL, which has been requested from the terminal 20, to the terminal 20 (process P522). The terminal 20 accesses to the received URL. If the terminal 20 accesses to the URL, for example, the advertising control server 50 transmits data of the page corresponding to the URL to the terminal 20. The page allows, for example, a banner-advertised application B to be introduced or to be installed (installation page).

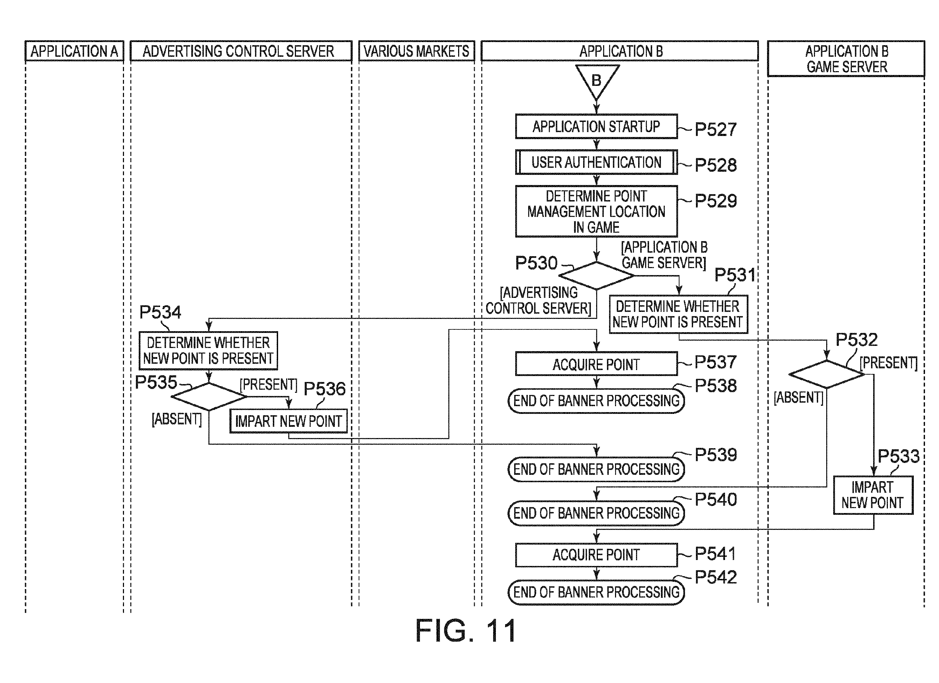

As illustrated in Fig. 11, the terminal 20 installs the banner-advertised application B through the installation page and then performs user authentication processing (process P528) upon the startup of the application B (process P527). The user authentication processing is as described with reference to Fig. 8.

After the end of the user authentication processing, the terminal 20 determines whether the management location of the value information (a game point such as a parameter for use in a game or an in-game currency, an item, an additional program, or the like) usable in the started application B (such as, for example, a game) is the advertising control server 50 or the game server 30 which manages the application concerned (processes P529 and P530).

If the management location of the game point or the like is the game server 30, the application B started up in the terminal 20 inquires of the game server 30 for whether there is a new point (process P531).

Unless there is any new game point or the like to be imparted to the application B started up in the terminal 20 (if ABSENT is determined in process P532), the game server 30 transmits that effect to the terminal 20. Thereby, the terminal 20 ends the banner processing.

On the other hand, if there is a new game point or the like to be imparted to the application B started up in the terminal 20 (if PRESENT is determined in process P532), the game server 30 imparts the new point or the like to the application B (process P533). Thereby, the application B started up in the terminal 20 acquires the game point or the like (process P541) and ends the banner processing (process P542).

If the management location of the game point or the like is the advertising control server 50, the application B started up in the terminal 20 inquires of the advertising control server 50 for whether there is a new point or the like (processes P534 and P535).

If there is any new game point or the like to be imparted to the application B started up in the terminal 20 (if PRESENT is determined in process P532) as a result, the advertising control server 50 imparts the new point or the like to the application B concerned (process P536). Thereby, the application B started up in the terminal 20 acquires a game point or the like (process P537) and ends the banner processing (process P538).

If there is no new game point or the like to be imparted to the application B started up in the terminal 20 (if ABSENT is determined in process P535), the advertising control server 50 transmits that effect to the terminal 20. Thereby, the application B started up in the terminal 20 ends the banner processing (process P539).

In this manner, if the "campaign banner" is selected at the terminal 20, the advertising control server 50 increases the sending/attracting customer points of the electronic commodity of the customer sending source and decreases the sending/attracting customer points of the electronic commodity of the customer sending destination. Moreover, if the electronic commodity targeted for campaign is introduced to the terminal 20 through the selection of the "campaign banner," value information usable in the electronic commodity targeted for campaign is imparted to the terminal 20.

### (5.4) Offer processing (Figs. 12 to 14)

The following describes offer processing performed by the advertising control server 50 (offer processing unit 511c) with reference to Figs. 12 to 14.

As illustrated in Fig. 12, if a certain application (assumed to be the application A) is started up in the terminal 20 and an offer method is started, the terminal 20 (application A) transmits an offer request to the advertising control server 50 (process P601).

Receiving the offer request, the advertising control server 50 determines whether the number of sending/attracting customer points of the account to which the offer request source application A belongs has reached a preset upper threshold value (processes P602 and P603). The upper threshold value is set to prevent "excessively sending customers."

If the number of sending/attracting customer points has reached the upper threshold value (if YES is determined in process P603), the advertising control server 50 ends the offer processing. Therefore, the offer page (for example, see Fig. 20) is not displayed for the application A started up in the terminal 20 (process P604).

On the other hand, unless the number of sending/attracting customer points has reached the upper threshold value (if NO is determined in process P603), the advertising control server 50 performs the sending/attracting customer balance processing (process P605) and transmits the URL of the offer page to the terminal 20 (process P606). If the terminal 20 accesses the URL, for example, the advertising control server 50 transmits data of the page (offer page) corresponding to the URL to the terminal 20.

Thereby, the application A of the terminal 20 displays the received offer page and monitors whether the selection operation (for example, clicking or tapping) for installation on the offer page has been performed (processes P607 and P608).

Unless the selection operation has been performed (if NO is determined in process P608), the application A of the terminal 20 ends the offer processing (process P609).

On the other hand, if the selection operation has been performed (if YES is determined in process P608), the terminal 20 transmits selection information indicating that the selection operation has been performed on the offer page to the advertising control server 50 (process P610).

The advertising control server 50 saves the received selection information into, for example, the log DB 536 (process P611) and transmits the URL of the installation page (offer page) to the terminal 20 (process P612).

The application A of the terminal 20 accesses the URL received from the advertising control server 50 (process P613). Immediately after the terminal 20 accesses the URL, for example, the advertising control server 50 transmits data of the page (offer page) corresponding to the URL to the terminal 20. Thereby, the terminal 20 displays the offer page (process P614). The offer page displays a candidate list for applications installable in the terminal 20.

The terminal 20 installs any one (assumed to be the application B) of the applications offered through the offer page concerned and then performs user authentication processing (process P616) upon the startup of the application B (process P615). The user authentication processing is as described with reference to Fig. 8.

After the end of the user authentication processing, the terminal 20 transmits the startup information of the application B to the advertising control server 50 (process P617). Receiving the startup information from the application B of the terminal 20, the advertising control server 50 saves information indicating that the offer is established into, for example, the log DB 536 (process P618).

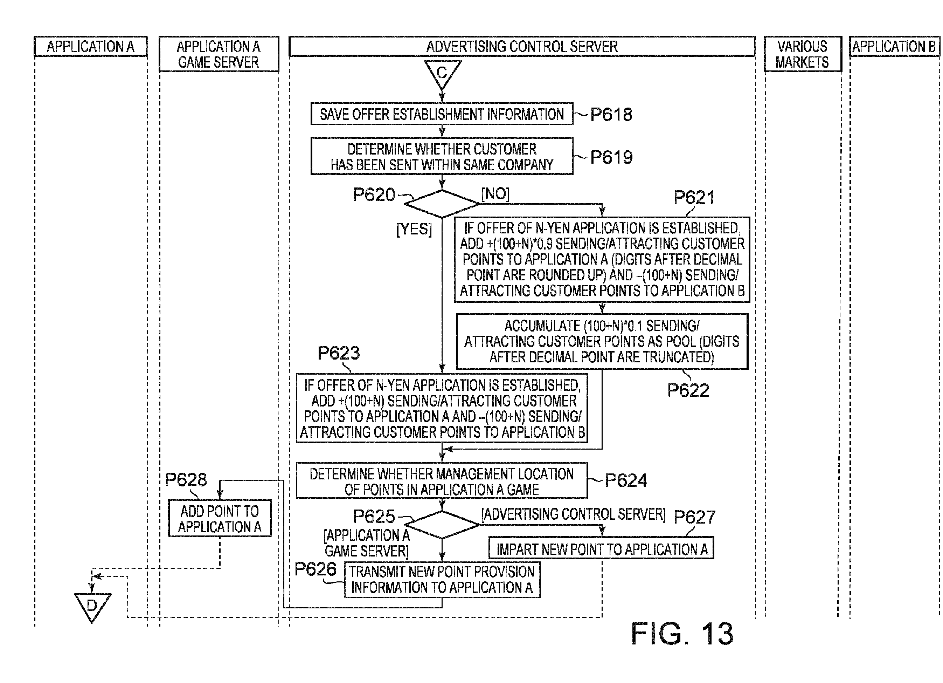

Thereafter, as illustrated in Fig. 13, the advertising control server 50 determines whether the customer has been sent within the same company (processes P619 and P620).

Unless the customer has been sent within the same company (if NO is determined in process P620), the advertising control server 50 increases the sending/attracting customer points of the application A, which is the customer sending source, if the offer from the paid application B (for example, N yen: N is an integer of zero or more) is established. For example, the advertising control server 50 adds points calculated according to, for example, +(100+N)×0.9 points (the digits after the decimal point are rounded up) to the sending/attracting customer points. On the other hand, the advertising control server 50 decreases the sending/attracting customer points of the application B, which is the customer sending destination. For example, the advertising control server 50 decreases the sending/attracting customer points by, for example, -(100+N) points (process P621). Note that, however, the (100+N)×0.1 points (the digits after the decimal point are truncated) can be pooled as insurance points in, for example, the sending/attracting customer point DB 531a (see Fig. 6) (process P622).

On the other hand, if the customer has been sent within the same company (if YES is determined in process P620), the advertising control server 50 increases the points of the application A which is the customer sending source [for example, increases the points by (100+N) points] and decreases the points of the application B which is the customer sending destination [for example, decreases the points by (100+N) points] (process P623).

Thereafter, the advertising control server 50 determines whether the management location of the value information such as a game point usable in the application A (for example, game) which is the customer sending source of the terminal 20 is the game server 30 or the advertising control server 50 (processes P624 and P625).

If the management location of the value information is the game server 30 as a result of the above determination, the advertising control server 50 transmits new point provision information to the game server 30 for the application A, which is the customer sending source of the terminal 20 (process P626).

Thereby, the game server 30 performs the processing of adding the game point or the like with respect to the application A, which is the customer sending source (process P628). On the other hand, if the management location of the value information is the advertising control server 50, the game server 30 imparts a new point or the like to the application A, which is the customer sending source (process P627).

Thereafter, if the application A, which is the customer sending source, is started up or resumed in the terminal 20, the terminal 20 performs user authentication processing (process P630). The details of the user authentication processing are as described with reference to Fig. 8.

After the end of the user authentication processing, the terminal 20 determines whether the management location of the value information such as a game point usable in the application A (for example, a game) which is the customer sending source is the game server 30 or the advertising control server 50 (processes P631 and P632).

If the management location of the value information is the game server 30 as a result of the determination, the application A which is the customer sending source of the terminal 20 inquires of the game server 30 for whether there is a game point or the like which has not been imparted yet.

The game server 30 which has received the inquiry determines whether there is a game point which has not been imparted yet (processes P633 and P634). If there is no game point which has not been imparted yet, the game server 30 transmits that effect to the terminal 20. Thereby, the application A which is the customer sending source of the terminal 20 ends the offer processing (process P635).

On the other hand, if there is any game point which has not been imparted yet to the application A which is the customer sending source in the game server 30, the game server 30 imparts a new game point or the like to the application A which is the customer sending source of the terminal 20 (process P636). Thereby, the application A which is the customer sending source of the terminal 20 acquires the new game point or the like (process P637) and ends the offer processing (process P638).

In contrast, if the management location of the value information such as a game point is the advertising control server 50, the application A which is the customer sending source of the terminal 20 inquires of the advertising control server 50 for whether there is a game point or the like which has not been imparted.

The advertising control server 50 which has received the inquiry determines whether there is any game point or the like which has not been imparted yet (processes P639 and P640). If there is no game point which has not been imparted yet, the advertising control server 50 transmits that effect to the terminal 20. Thereby, the application A which is the customer sending source of the terminal 20 ends the offer processing (process P642).

On the other hand, if there is any game point which has not been imparted yet to the application A which is the customer sending source in the advertising control server 50, the advertising control server 50 imparts a new game point or the like to the application A which is the customer sending source of the terminal 20 (process P641). Thereby, the application A which is the customer sending source of the terminal 20 acquires the new game point (process P643) and ends the offer processing (process P644).

In this manner, if the offer is established with the terminal 20 in this manner, the advertising control server 50 increases the sending/attracting customer points of the electronic commodity of the customer sending source and decreases the sending/attracting customer points of electronic commodity of the customer sending destination. Moreover, with the introduction processing of the electronic commodity of the customer sending destination as an outcome, the advertising control server 50 imparts the value information usable in the electronic commodity of the customer sending source to the terminal 20.

### (5.5) Sending/attracting customer balance processing (Figs. 15 and 16)

The following describes the sending/attracting customer balance processing (a banner case and an offer case) performed by the advertising control server 50 (sending/attracting customer balance processing unit 511d) with reference to Figs. 15 and 16.

### (5.5.1) Banner case (Figs. 9 and 15)

In the sending/attracting customer balance processing P505 described with reference to Fig. 9, the processing illustrated in Fig. 15 is performed. Specifically, the advertising control server 50 (the sending/attracting customer balance processing unit 511 d) references the banner data list 533 (see Fig. 6) in the advertising information DB 531c (process P701) and excludes an installed application having the corresponding server ID from the banner data list (process P702).

Subsequently, the advertising control server 50 aligns the data in the banner data list 533 in the order of points (process P703) and selects the application having the highest number of points (process P704). The advertising control server 50 then determines whether the sending/attracting customer points of the account to which the selected application belongs has reached a preset lower threshold value (processes P705 and P706). The "lower threshold value" is set to prevent "excessively attracting customers."

If the number of total points has reached the preset lower threshold value as a result of the determination (if YES is determined in process P706), the advertising control server 50 excludes the selected application from the banner data list 533 (process P707) and then selects another application having the highest number of points in the banner data list 533 anew (process P704).

On the other hand, unless the number of sending/attracting customer points has reached the lower threshold value (if NO is determined in process P706), the advertising control server 50 checks the cache for the banner transmission history to the application (assumed to be the application A) (process P708). The advertising control server 50 determines whether a banner advertisement which guides the user to another application B has been displayed within the last five times in the application A as a result of the aforementioned check (processes P709 and P710).

If the banner advertisement which guides the user to the application B within the last five times in the application A as a result of the determination (if YES is determined in process P710), the advertising control server 50 excludes the selected application A from the banner data list and then selects another application having the highest number of points anew (process P704).

On the other hand, unless the banner advertisement which guides the user to the application B within the last five times in the application A, the advertising control server 50 decides the banner advertisement displayed in the application A to be a banner for guiding the user to the application B (process P712).

### (5.5.2) Offer case (Fig. 16)

Subsequently, in the sending/attracting customer balance processing P605 described with reference to Fig. 12, the processing illustrated in Fig. 16 is performed. Specifically, as illustrated in Fig. 16, the advertising control server 50 (the sending/attracting customer balance processing unit 511d) references the offer data list 534 (see Fig. 6) of the advertising information DB 531c (process P801) and excludes the application for which the offer of the server ID has already been established from the offer data list (process P802).

Subsequently, the advertising control server 50 aligns the data in the offer data list in the order of points (process P803) and determines whether there is an application where the number of sending/attracting customer points of the account to which the application targeted for advertisement display belongs has reached a preset lower threshold value (processes P804 and P805).

If there is the application where the number of sending/attracting customer points has reached the preset lower threshold value (if YES is determined in process P805), the advertising control server 50 excludes the application from the offer data list (process P806) and decides an offer arrangement order (process P807).

If there is no application where the number of sending/attracting customer points has reached the lower threshold value (if NO is determined in process P805), the advertising control server 50 does not change the offer arrangement order of the offer data list (process P807).

The advertising control server 50 (the sending/attracting customer balance processing unit 511d) controls the electronic commodity and the advertising information associated with the electronic commodity on the basis of the sending/attracting customer points as described above. For example, if there is an electronic commodity whose sending customer performance is relatively higher than other electronic commodities, the advertising control server 50 selects the advertising information including information on the electronic commodity having the higher sending customer performance as the advertising information to be transmitted to the terminal 20 in association with other electronic commodities.

In the example of Fig. 3, the application A has the higher number of sending/attracting customer points than those of other applications and has higher sending customer performance. Therefore, the advertising control server 50 selects and transmits the advertising information of the application A as the advertising information to be transmitted in association with other applications.

If the user of the terminal 20 views the advertising information and then selects the advertising information or introduces the application A through the selection, the sending/attracting customer point values of other applications rises (due to sending customers to the application A).

This increases the number of selections or the number of introductions of the application A whose sending customer performance is originally higher than other applications and thus leads to a further increase in the number of customers sent from the application A having the higher sending customer performance to other applications as a result.

In this manner, control is performed such as selecting and/or deciding advertising information to be transmitted or the like so that sending/attracting customer points are equally or uniformly provided (leveled) to the applications, thereby enabling effective advertising. In addition to the above method of controlling the sending/attracting customer points so as to be uniformly provided, there is a method of selecting and transmitting (to display) advertising information of an application required to attract customers (the number of sending/attracting customer points is low) to the respective applications including applications which already have high sending customer performance (the number of sending/attracting customer points is high), as a method of performing effective advertising on the basis of sending/attracting customer points. This method is effective in the case, for example, where there is an application whose sales figures are or the number of users is required to increase on a short-term basis. Therefore, naturally the control of the advertising information based on the sending/attracting customer points may be modified in various ways and carried out without departing from the scope of the invention.

### [6] Conclusion

As described above, according to the present exemplary embodiment, the number of times (volume) to use the advertisement corresponding to each application is counted to calculate (for example, add or subtract) sending/attracting customer points appropriate to the number of times (volume) to use the advertisement with considering from and to which application the advertisement is used, by which the advertising volume or content between applications can be varied according to the sending/attracting customer points.

Therefore, it is possible to grasp the status of utilization of the advertisement, such as through which and of which electronic commodity the advertisement has been viewed or used, and then to effectively adjust or uniform the number of sent/attracted customers for the commodity according to the status of utilization. Accordingly, it is possible to grasp how a user is guided between electronic commodities and to invite the user to other commodities efficiently.

In the above exemplary embodiments, the difference in the number of sending/attracting customer points, the upper and lower threshold values of sending/attracting customer points, and the like are merely examples of information indicating the quantity or difference in sent or attracted customers (variable parameters) and the "addition and subtraction" of the sending/attracting customer points are not limited to the aspects described in the aforementioned embodiments. For example, as for whether sending/attracting customer points are to be added or subtracted, either will be fine as long as one is addition and the other is subtraction.

### Description of the Reference Numerals

- 1: Advertising provision system
- 10: Communication network
- 20: Terminal device
- 30: Commodity server
- 40: Settlement server
- 50: Advertising control server
- 210: Computing device
- 211: Processor core
- 212: Memory module
- 213: Graphics engine
- 2131: Graphics core
- 2132: Graphics memory
- 214: Sound engine
- 215: I/O controller
- 216: System bus
- 220: Touch screen
- 221: Display
- 222: Touch sensor
- 230: Audio output unit
- 240: External media unit
- 250: Communication unit
- 260: Operation button
- 270: Front camera
- 290: Rear camera
- 501: Control unit
- 503: Input device
- 505: External storage device
- 506: Output device
- 506A: Display
- 506B: Speaker
- 507: Communication interface (IF)
- 511: CPU
- 511a: Authentication processing unit
- 511b: Offer processing unit
- 511b: Banner processing unit
- 511c: Offer processing unit
- 511d: Sending/attracting customer balance processing unit
- 512: ROM
- 513: Main memory
- 514: Graphics memory
- 515: Audio memory
- 516: GPU
- 518: Audio processor
- 521: Peripheral interface (IF)
- 530: Storage unit
- 531: Application database (DB)
- 531a: Sending/attracting customer point DB
- 531b: Company information DB
- 531c: Advertising information DB
- 533: Banner data list
- 534: Offer data list
- 535: User DB
- 536: Log DB

## Claims

1. An electronic commodity provision system, which is an advertising provision system, which provides advertising information on any one of a plurality of electronic commodities to a terminal device via a communication network, the advertising provision system comprising;
parameter storage means for storing a variable parameter for every plurality of electronic commodities;
advertising information storage means for storing advertising information including information on any one of the electronic commodities;
transmission means for transmitting the advertising information to the terminal device in association with any one of the electronic commodities;
receiving means for receiving use information indicating that the transmitted advertising information has been used in the terminal device from the terminal device; and
control means which updates a variable parameter corresponding to the electronic commodity with which the advertising information is associated and/or the variable parameter corresponding to the electronic commodity as information included in the advertising information upon receiving the use information at the receiving means and controls the advertising information associated with the electronic commodity to be transmitted through the transmission means based on the variable parameters after the updating.

2. The electronic commodity provision system according to claim 1, wherein:
the use information includes viewing information indicating that the advertising information has been selected in the terminal device and/or introduction information indicating that the electronic commodity as information included in the advertising information has been introduced through the advertising information; and
the control means varies the update degree of the variable parameter according to whether the information is the viewing information or the introduction information.

3. The electronic commodity provision system according to claim 1 or 2, wherein:
the parameter storage means stores a price parameter corresponding to the price of the electronic commodity; and
the control means varies the update degree of the variable parameter according to the price parameter.

4. The electronic commodity provision system according to any one of claims 1 to 3,
wherein the updating includes increasing or decreasing the variable parameter corresponding to the electronic commodity with which the advertising information is associated and decreasing or increasing the variable parameter corresponding to the electronic commodity as information included in the advertising information.

5. An advertising control device for use in an advertising provision system which provides a terminal device with advertising information on any one of a plurality of electronic commodities via a communication network, the advertising control device comprising:
parameter storage means for storing a variable parameter for every plurality of electronic commodities;
advertising information storage means for storing advertising information including information on any one of the electronic commodities;
transmission means for transmitting the advertising information to the terminal device in association with any one of the electronic commodities;
receiving means for receiving use information indicating that the transmitted advertising information has been used in the terminal device from the terminal device; and
control means which updates a variable parameter corresponding to the electronic commodity with which the advertising information is associated and/or the variable parameter corresponding to the electronic commodity as information included in the advertising information upon receiving the use information at the receiving means and controls the advertising information associated with the electronic commodity to be transmitted through the transmission means based on the variable parameters after the updating.

6. An advertising control program which causes a computer to function as an advertising control device for use in an advertising provision system which provides a terminal device with advertising information on any one of a plurality of electronic commodities via a communication network, the advertising control program causing the computer to perform the processes of:
storing a variable parameter for every plurality of electronic commodities;
storing advertising information including information on any one of the electronic commodities;
transmitting the advertising information to the terminal device in association with any one of the electronic commodities;
receiving use information indicating that the transmitted advertising information has been used in the terminal device from the terminal device; and
updating a variable parameter corresponding to the electronic commodity with which the advertising information is associated and/or the variable parameter corresponding to the electronic commodity as information included in the advertising information upon receiving the use information and controlling the advertising information associated with the electronic commodity to be transmitted based on the variable parameters after the updating.
